# EUROPÄISCHE PATENTSCHRIFT

(11) **EP 3 511 472 B1**
(45) Veröffentlichungstag und Bekanntmachung des Hinweises auf die Patenterteilung: **07.05.2025**
(21) Anmeldenummer: 18208306.3
(22) Anmeldetag: 26.11.2018
(51) Int. Cl.: E02F 9/20, B66C 13/16, E02F 9/26, H04N 7/18

(54) **BAUMASCHINE, INSBESONDERE ERDBEWEGUNGSMASCHINE MIT EINEM BEDIENPULT**
CONSTRUCTION MACHINE, IN PARTICULAR EARTH MOVER HAVING A CONTROL PANEL
MACHINE DE CONSTRUCTION, EN PARTICULIER ENGIN DE TERRASSEMENT DOTÉ D'UN PUPITRE DE COMMANDE

(30) Priorität: 22.12.2017 DE 102017131264
(43) Veröffentlichungstag der Anmeldung: 17.07.2019
(73) Patentinhaber: Liebherr-Hydraulikbagger GmbH, 88457 Kirchdorf (DE)
(72) Erfinder: Bolz, Gerhard, 88457 Kirchdorf/Iller (DE); Ansorge, Dieter, 88430 Rot an der Rot (DE); Mang, Florian, 87700 Memmingen (DE)
(74) Vertreter: Laufhütte, Dieter

(56) Entgegenhaltungen:
- EP-A1- 0 811 728
- DE-A1- 102012 014 655
- DE-U1- 20 207 722
- US-A1- 2008 188 954
- US-A1- 2010 049 410
- US-A1- 2013 079 974
- US-A1- 2014 297 160
- US-A1- 2014 298 228
- ANONYMOUS: "FENDT 720, 722, 724 Vario", FENDT 700 SERIES OPERATOR'S MANUAL, 1 June 2011 (2011-06-01), XP055489300

## Beschreibung

Die Erfindung betrifft eine Baumaschine, insbesondere eine Erdbewegungsmaschine mit einem Bedienpult.

Mit zunehmendem technischem Fortschritt wird der Funktionsumfang bei der Steuerung moderner Baumaschinen stetig wachsen. Zwar wird der Bediener der Baumaschine durch den höheren Automatisierungsgrad bei der Steuerung der Baumaschine besser unterstützt, allerdings wird dadurch auch das Bedienpult für den Bediener zur Steuerung der Baumaschine immer umfangreicher und letztendlich unübersichtlicher.

Als Beispiel sei eine bestehende Baumaschine in Form eines Hydraulikbaggers genannt. In der Fahrerkabine sind üblicherweise zwei Gebergriffe rechts und links neben dem Fahrersitz angeordnet. Darüber hinaus ist eine große Anzahl von weiteren Bedienelementen, bspw. Knöpfe bzw. Schalter, in der erreichbaren Umgebung des Fahrersitzes vorgesehen, insbesondere in der Steuerkonsole oder der rechten Seitenverkleidung. Wünschenswert ist eine Anordnung der Bedienelemente an bequem durch den Fahrer zu erreichenden Positionen innerhalb der Kabine, was jedoch in Zukunft aufgrund der wachsenden Anzahl von Bedienelementen nur schwer möglich sein dürfte. Im Ergebnis muss eine teilweise stark verstreute Anordnung in Kauf genommen werden.

Die Knöpfe/Schalter sind meistens in Form von Folientastaturflächen oder auch fingerbetätigbaren Schalter ausgeführt. Zur Kennzeichnung der zugewiesenen Funktion sind die Bedienelemente mit definierten Symbolen bedruckt oder mit passenden Beschriftungen in unmittelbare Nähe am Bedienelement versehen. Eine Rückmeldung nach Betätigung der einzelnen Bedienelemente erfolgt, lediglich in Form von Lichteffekten.

Die Funktionsbelegung als auch die Anordnung der Bedienelemente ist fest vorgegeben und kann, wenn überhaupt, nur unter großem Aufwand verändert werden.

Dokumente aus dem Stand der Technik, die während des Patenterteilungsverfahrens erwähnt wurden sind u.a.: US 2014/297160 A1 und DE 10 2012 014655 A1.

Die Erfinder haben die oben beschriebene Problematik erkannt und sich zur Aufgabe gesetzt, ein neuartiges Konzept für ein Bedienpult zur Steuerung einer Baumaschine zu entwickeln, das die oben genannten Probleme zu überwinden weiß. Gelöst wird diese Aufgabe durch eine Baumaschine mit den Merkmalen des Anspruchs 1. Vorteilhafte Ausgestaltungen der Baumaschine sind Gegenstand der abhängigen Ansprüche.

Erfindungsgemäß wird eine Baumaschine vorgeschlagen, insbesondere eine Erdbewegungsmaschine, besonders bevorzugt ein Bagger, beispielsweise in Form eines Hydraulikbaggers, mit wenigstens einem Bedienpult zur Eingabe von Bedienerbefehlen für die Steuerung der Baumaschine. Kern der Erfindung ist die Ausstattung des Bedienpultes mit wenigstens einem Anzeigemittel, das eine Darstellung einer dynamisch generierbaren Bedienoberfläche zur Maschinensteuerung aufweist. Für die Ansteuerung dieses Anzeigemittels ist zudem eine Steuereinheit vorgesehen, die eine Änderung des Betriebsmodus der Baumaschine erkennt und in Abhängigkeit der Betriebsmodusänderung die Bedienoberfläche entsprechend anpasst.

Diese konstruktive Lösung bietet daher die Möglichkeit, ein kompaktes Bedienpult zur Verfügung zu stellen, das in Abhängigkeit des Gerätemodus, d.h. in Abhängigkeit der auszuführenden Arbeitsprozesse, eine entsprechende Bedienoberfläche zur Ansteuerung der Maschine dynamisch generiert.

Die generierte Bedienoberfläche ist vorzugsweise eine graphische Bedienoberfläche, insbesondere mit ein oder mehrere graphischen Bediensymbole, bspw. in Form von Schaltern, Tastern oder sonstigen Bedienelementen, und/oder mit Schalter- bzw. Tasterbezeichnungen. Dem Bediener wird demzufolge dynamisch eine eingeschränkte, auf den jeweiligen Betriebsmodus angepasste Auswahl von Funktionen bzw. Steuerbefehlen angeboten. Die Steuereinheit ermittelt demzufolge vor der eigentlichen Generierung der Bedienoberfläche welche Funktionen und Steuerbefehle für den jeweiligen Betriebsmodus erlaubt bzw. überhaupt sinnvoll sind

Anderweitige Bedienelemente, denen für den aktuellen Gerätemodus bzw. Arbeitsprozess keine relevante Funktion zukommt, werden zur Optimierung der Übersichtlichkeit des Bedienpultes entweder speziell gekennzeichnet, ausgeblendet oder erst gar nicht angezeigt.

Das Anzeigemittel des Bedienpultes ist gemäß bevorzugter Ausführung ein berührungsempfindliches Anzeigeelement. Die Betätigung der durch die Bedienoberfläche dargestellten Bedienelemente erfolgt demzufolge durch Berührung der jeweiligen Position am Anzeigemittel. Das Touchdisplay kann ein Multitouch-Display sein.

Denkbar ist es auch, dass das Bedienpult ein oder mehrere reale Bedienelemente umfasst, deren Beschriftung mittels des Anzeigemittels und demzufolge auch deren Funktionsbelegung durch die Steuereinheit änderbar ist.

Das Bedienpult kann weiterhin wenigstens ein Informationsanzeigeelement umfassen, das keine Bedienelemente ausgibt, sondern lediglich zur Informationsausgabe gedacht ist. Dieses informative Anzeigeelement kann jedoch auch Bestanteil des Anzeigemittels zur Anzeige dynamischer Bedienelemente sein.

Die Informationsausgabe erfolgt ebenfalls mittels einer graphischen Benutzeroberfläche, die ein oder mehrere Informationsfelder in geordneter Weise auf der verfügbaren Anzeigefläche aufteilt. Die Steuereinheit kann ebenfalls konfiguriert sein, die Benutzeroberfläche des Informationsanzeigeelementes in Abhängigkeit des erfassten Gerätemodus dynamisch anzupassen bzw. zu generieren. Auch hier können bspw. nur für den jeweiligen Gerätemodus relevante Informationsfelder angezeigt werden.

Gemäß bevorzugter Ausführungsform ist als Betriebsmodus der Baumaschine beispielsweise der reguläre Arbeitsbetrieb, so im Fall eines Baggers beispielsweise der reguläre Baggerbetrieb zu verstehen. Ein weiterer Betriebsmodus kann der Fahrbetrieb der Baumaschine sein, um diese nicht nur auf der Baustelle bewegen zu können, sondern ebenfalls auch im Straßenverkehr fortbewegen zu können. Ferner kann als Betriebsmodus ein Wartungs- bzw. Testbetrieb verstanden werden.

In Anbetracht der vorgenannten unterschiedlichen Betriebsmodi kann es somit sinnvoll sein, während des aktiven Gerätemodus "Arbeitsbetrieb" entsprechende Bedienelemente für den regulären Grabbetrieb über das Anzeigeelement des Bedienpultes einzublenden und für den Funktionsaufruf bereitzustellen. Gleiches gilt für das Informationsanzeigeelement. Wechselt der Bediener dann in den Fahrbetrieb, so zeigt das Anzeigeelement des Bedienpultes entsprechende Bedienelemente für die Fortbewegung der Baumaschine auf der Baustelle bzw. im Straßenverkehr an und auf dem Informationsanzeigeelement werden bspw. Fahrinformationen ausgegeben, wie die aktuelle Geschwindigkeit, Navigationsdaten, etc.

Gleiches gilt in adäquater Weise für den Gerätemodus Wartungs- bzw. Testbetrieb.

Diese Vorgehensweise hat den Vorteil, dass der Bediener im jeweiligen Gerätemodus schnell eine übersichtliche Anzeige der verfügbaren Bedienelemente erhält. Gleichermaßen reduziert die Erfindung auch die Gefahr von Fehlbedienungen, da die im jeweiligen Gerätemodus nicht benötigten Bedienelemente und entsprechenden Funktionen ausgeblendet und daher zur Auswahl und Betätigung erst gar nicht zur Verfügung stehen.

Die dynamische Generierung der Bedienoberfläche, d.h. die Anzeige etwaiger Bedienelemente bzw. die reine Informationsanzeige, kann jedoch nicht nur auf Grundlage des aktuelle Betriebsmodus der Baumaschine erfolgen, sondern die Steuereinheit kann zudem Änderungen am Maschinenzustand erkennen und in Abhängigkeit erkannter Zustandsänderungen die Bedienoberfläche dynamisch anpassen. Ein möglicher Zustand kann beispielsweise die entsprechende Rüstung der Baumaschine sein. Im Falle eines Baggers kann damit die Montage des entsprechenden Anbaugerätes verstanden werden. In Abhängigkeit des montierten Anbaugerätes werden dann die passenden Bedienelemente zur Steuerung des Anbaugerätes auf dem Bedienpult zur Anzeige gebracht. Bspw. kann die Steuereinheit einen erfolgten Werkzeugwechsel an der Baumaschine erkennen und nachfolgend die Bedienoberfläche des Anzeigemittels anpassen. Gleiches kann beim teilautomatisierten Aufrufen einer Werkzeugkontrolle sowie einer Lichtsteuerung der Fall sein.

Ein Geräte- bzw. Maschinenzustand, der eine Anpassung der Bedienoberfläche auslöst, kann beispielsweise auch eine Abweichung zwischen Soll- und Istgröße eines beliebigen Regelkreises der Baumaschine sein. Als Beispiel sei hier eine entsprechende Klimaautomatisierung der Baumaschinenkabine genannt. Wird von der Steuereinheit eine Abweichung der Soll-Innentemperatur der Kabine von der Ist-Innentemperatur festgestellt, so kann die Steuereinheit automatisch entsprechende Bedienelemente für die Klimasteuerung zur Anzeige bringen, um dem Bediener auf diesen Missstand aufmerksam zu machen und diesem gleich passende Bedienelemente zur Nachregelung anzubieten.

Erfindungsgemäß erkennt die Steuereinheit Anderungen der vorliegenden Umweltbedingungen automatisiert bzw. teilautomatisch. In Abhängigkeit erkannter Änderungen kann dann eine Anpassung der dynamisch generierten Bedienoberfläche des Anzeigemittels bzw. die Informationsanzeigeelementes erfolgen. Vorstellbar ist hier, dass in Abhängigkeit von Dämmerungs-, Niederschlags- oder Temperaturwerten passende Bedienelemente eingeblendet werden. Idealerweise können ab einem bestimmtem Dämmerungswert Bedienelemente zur Lichtsteuerung der Baumaschine angezeigt werden. Gewisse Niederschlagswerte lösen die Einblendung von Bedienelementen zur Steuerung einer Scheibenwischanlage aus, während bei entsprechenden Aussentemperaturen Bedienelemente für die Klimatisierung der Fahrerkabine angezeigt werden.

Ferner kann die Steuereinheit derart konfiguriert sein, sodass diese spezielle manuelle Benutzereingaben erkennt und als Reaktion darauf die Bedienoberfläche des Anzeigeelementes entsprechend anpasst. Unter diesen speziellen Benutzereingaben sollen solche Eingaben verstanden werden, die nicht über die Bedienoberfläche getätigt werden, sondern bspw. mittels eines externen festen Bedienelementes eingesetzt wurden. Konkret sind darunter Bedieneingaben über Master-Bedienelemente, wie die neben dem Fahrersitz angeordneten Geber zu verstehen.

Betätigt der Bediener beispielsweise einen fest installierten Geber, dem eine konkrete Funktion wie die Steuerung der Abstützung zugeordnet ist, so wird die angezeigte Bedienoberfläche bzw. die Darstellung auf dem Informationsanzeigeelement automatisch an den Prozess zur Betätigung der Abstützung angepasst.

Vorangehend wurde nun eine Vielzahl von Faktoren genannt, die von der Steuereinheit ausgewertet und berücksichtigt werden, um anschließend eine entsprechende Bedienoberfläche dynamisch zu generieren. Von Vorteil kann es sein, diese Faktoren für die Anpassung der Bedienoberfläche bzw. der Darstellung auf dem Informationsanzeigeelement unterschiedlich zu gewichten, um deren Einfluss auf die jeweilige Anpassung zu steuern. Sinnvollerweise wird eine Änderung des Betriebsmodus durch die Steuereinheit mit einer höheren Priorität belegt als die übrigen Einflussfaktoren.

Ferner ist vorgesehen, dass sowohl das Anzeigemittel des Bedienpultes als auch ein etwaiges Informationsanzeigeelement personifizierbare Darstellungsbereiche vorsieht. Hierdurch lässt sich die visuelle Darstellung an die jeweiligen Nutzerbedürfnisse anpassen. Grundlage kann die Hinterlegung von Nutzerprofilen in der Steuereinheit oder einem externen abrufbaren Speicher sein. Ferner ist es sinnvoll, die Steuereinheit bzw. die Baumaschine mit etwaigen Authentifizierungsmitteln auszustatten, die nach einer erfolgreichen Nutzerauthentifizierung automatisch das zugeordnete Nutzerprofil abrufen und die Bedienoberfläche und/oder die Anzeige am Informationsanzeigeelement gemäß den Profileinstellungen anpassen.

Ein weiterer Aspekt der Erfindung sieht vor, den Benutzer beim Umschalten zwischen unterschiedlichen Betriebsmodi aktiv zu unterstützen. In der Regel ist es zwingend notwendig, dass für die Aktivierung eines spezifischen Betriebsmodi gewisse Voreinstellungen an der Baumaschine erfüllt sein müssen. Als zu prüfende und überwachende Voreinstellungen gelten etwaige Maschineneinstellungen und vorliegenden Maschinenparameter, als auch konkrete Positionsdaten bzw. Ausrichtungen von einzelnen Baumaschinenkomponenten. Nach einem erkannten Umschaltwunsch in einen anderen Gerätemodus führt die Steuereinheit automatisch eine Prüfung der modusrelevanten Voreinstellungen durch. In Abhängigkeit des Prüfergebnisses kann vorteilhafterweise ein Korrekturprozesse zur Anpassung der erfassten Voreinstellungen ausgelöst werden, wobei der Korrekturprozess den Nutzer entweder auf die notwendige Korrektur der jeweiligen Voreinstellung aktiv hinweist, bspw. durch visuelle Aufforderung und optimalerweise passende Einblendung der benötigten Bedienelemente, oder aber die Steuereinheit kann die Korrektur automatisch vornehmen und den Nutzer gegebenenfalls über die erfolgte Korrektur informieren.

Bspw. muss bei einem Mobilbagger für die Aktivierung des Modus "Strassenfahrt" zunächst der Oberwagen ausgerichtet und im Anschluss das Drehwerk verriegelt werden. In diesem Fall fordert die Steuereinheit den Nutzer aktiv auf, den Oberwagen in die entsprechende Position zu verfahren. Kommt der Nutzer dieser Aufforderung nach, kann die Steuereinheit anschliessend bspw. das Drehwerk automatisch verriegeln.

Gemäß vorteilhafter Ausführungsform kann die Baumaschine, insbesondere die Steuereinheit, mit wenigstens einer Schnittstelle für die Kommunikation mit wenigstens einem Mobilgerät ausgeführt sein. Besonders bevorzugt dient die Schnittstelle zur Kommunikation mit sogenannten Wearables.

Gemäß weiter bevorzugter Ausführungsform ist vorgesehen, dass die Baumaschine, insbesondere die Steuereinheit, die aktuelle Position des gekoppelten Mobilgerätes zumindest im direkten Arbeitsumfeld der Baumaschine erfasst. Die erfasste aktuelle Position kann dann bei der Maschinensteuerung, vorzugsweise bei der Ansteuerung etwaiger Maschinenaktoren Berücksichtigung finden, um die Kollisionsgefahr zwischen Maschinenkomponenten und einer das Mobilgerät mitführenden Person auszuräumen. Denkbar ist es auch, dass die Steuereinheit konfiguriert ist, die Position aller der über die Schnittstelle gekoppelten Mobilgeräte über ein Anzeigeelement dem Bediener der Baumaschine auszugeben.

Denkbar ist es ebenso, dass mittels der gekoppelten Mobilgeräte ein Fernzugriff auf die am Anzeigemittel dargestellte Bedienoberfläche erfolgen kann.

Weitere Vorteile und Eigenschaften der Erfindung sollen im Folgenden anhand eines in den Figuren dargestellten Ausführungsbeispiels näher erläutert werden. Es zeigen:
- Figur 1:: ein Blockschaltbild zur Verdeutlichung der Priorisierung der Einflussfaktoren für die dynamische Generierung der Bedienoberfläche;
- Figur 2:: ein Blockschaltbild zur Verdeutlichung des Prozesses für die Abfrage von Geräteabhängigkeiten bei einem Mode-Wechsel;
- Figur 3:: ein Blockschaltbild gemäß der Figur 2 für einen konkreten Moduswechsel zwischen Arbeitsbetrieb und Fahrbetrieb und
- Figur 4:: unterschiedliche Screenshots des Anzeigeelementes des Bedienpults.
Anhand der nachfolgenden Figuren 1 soll die erfindungsgemäße Baumaschine und das Verhalten des neuartigen Bedienpultes verdeutlicht werden.

Wie bereits voranstehend ausführlich beschrieben wurde, besteht der Kerngedanke der Erfindung in einer dynamisch generierbaren Bedienoberfläche. Ein Großteil der sonst in Hardware umgesetzten Funktionstasten für die Steuerung der Baumaschine wird nun mit mittels einer graphischen Bedienoberfläche simuliert, die je nach Betriebsmodus, Maschinenzustand und in Abhängigkeit weiterer Einflussfaktoren die jeweils relevanten Bedienelemente anzeigt. Die angezeigten Bedienelemente werden dabei auf die jeweils relevanten Funktionen für den auszuführenden Arbeitsprozess beschränkt, so dass das gesamte Bedienpult für den Maschinenführer nicht nur übersichtlicher und besser handhabbar ist, da die verringerte Anzahl an Bedienelementen an der optimal für den Maschinenführer zu erreichenden Stelle platzierbar ist, sondern die Betriebssicherheit kann zunehmend verbessert werden, da die Wahrscheinlichkeit unbeabsichtigter Fehleingaben verringert werden kann.

Das Bedienpult umfasst ein Anzeigeelement in Form eines berührungssensitiven Touchdisplay, das zur Anzeige einer graphischen Bedienoberfläche dient. Ferner ist ein Informationsdisplay vorgesehen, das dem Bediener lediglich Maschinendaten zur Anzeige bringt. Mittels der Erfindung, insbesondere mittels der Steuereinheit wird erreicht, dass sowohl die Bedienoberflache auf dem Touchdisplay als auch die Informationsanzeige je nach Arbeitsprozess und Gerätezustand während des Betriebs anpasst wird.

Sowohl die Informationsanzeige als auch das Touchdisplay zur Bedienung sind gut einsehbar in Relation zum Bediener innerhalb der Baumaschinenkabine angeordnet. Insbesondere ist das Touchdisplay ergonomisch zum Gerätebediener angeordnet. Informationsdisplay und Touchdisplay können voneinander getrennt ausgeführt oder als gemeinsame kompakte Einheit umgesetzt sein. Auch eine herausnehmbare Lösung ist für beide Einheiten denkbar.

Informationsanzeige und Bedienoberfläche des Touchdisplays können einfach um neu implementierte Funktionen (z.B. Erkennen eines neuen Anbauwerkzeugs) nachrüstbar und erweiterbar ausgeführt sein. Ebenso können beide Elemente personifizierbare Teilbereiche sowohl in der Anzeige als auch in der Bedienoberfläche vorsehen, welche für unterschiedliche Bediener je nach persönlichem Wunsch gestaltet und abgespeichert werden können. In diesem Fall ist es sinnvoll, wenn der Bediener eingegeben oder automatisch erkannt wird. Idealerweise werden die personifizierten Einstellungen über alle Geräte erkannt und zur Verfügung gestellt.

Ein besondere Aspekt der Erfindung besteht darin, dass die Bedienung strukturiert ist und nach bestimmten Prioritäten lediglich die im jeweiligen Arbeitsprozess relevanten Bedien- und Einstellmöglichkeiten zur Verfügung gestellt werden.

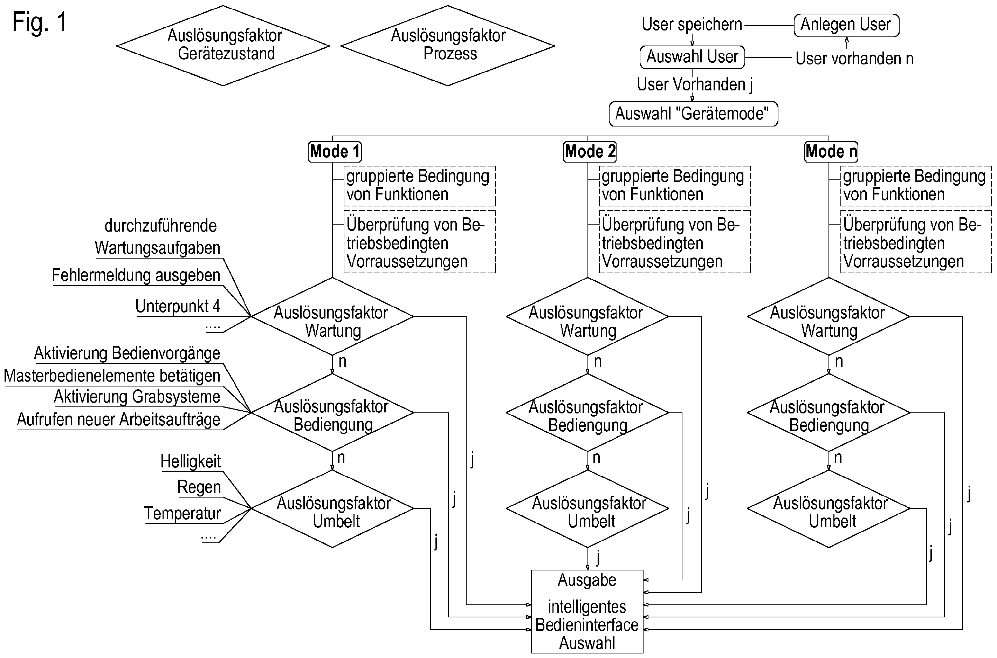

Die Priorisierung der einzelnen Einflussfaktoren für die dynamische Generierung der Bedienoberfläche als auch die graphische Gestaltung der Informationsanzeige wird in Figur 1 verdeutlicht. Zu Beginn des Prozesses erfolgt die Authentifizierung des Bedieners der Baumaschine. Nachfolgend wird für das erläuterte Ausführungsbeispiel von einem Bagger als Baumaschine ausgegangen, der über eine Krankabine mit dem erfindungsgemäßen Bedienpult verfügt. Nach entsprechender Nutzerauthentifizierung, die beispielsweise über eine schnurlose Kommunikationsschnittstelle zwischen der Steuereinheit und einem Wearable erfolgt, wird ein entsprechendes Benutzerprofil, das in der Steuereinheit hinterlegt ist, geladen und dieses nachfolgend für jegliche Generierung der Benutzeroberfläche herangezogen. Ist der Nutzer bisher unbekannt, kann zunächst ein neues Profil angelegt werden.

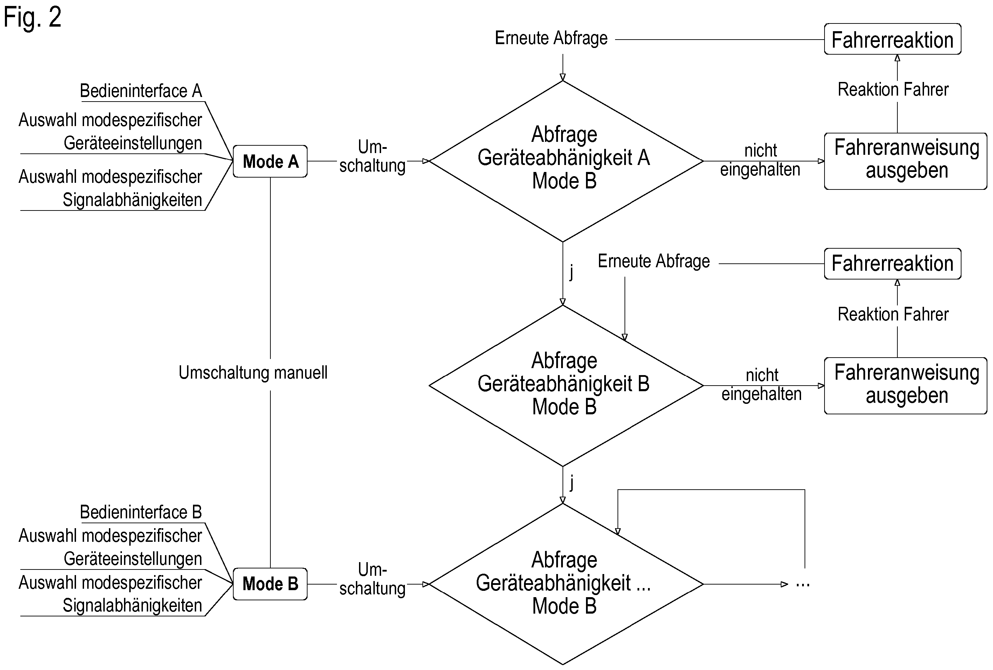

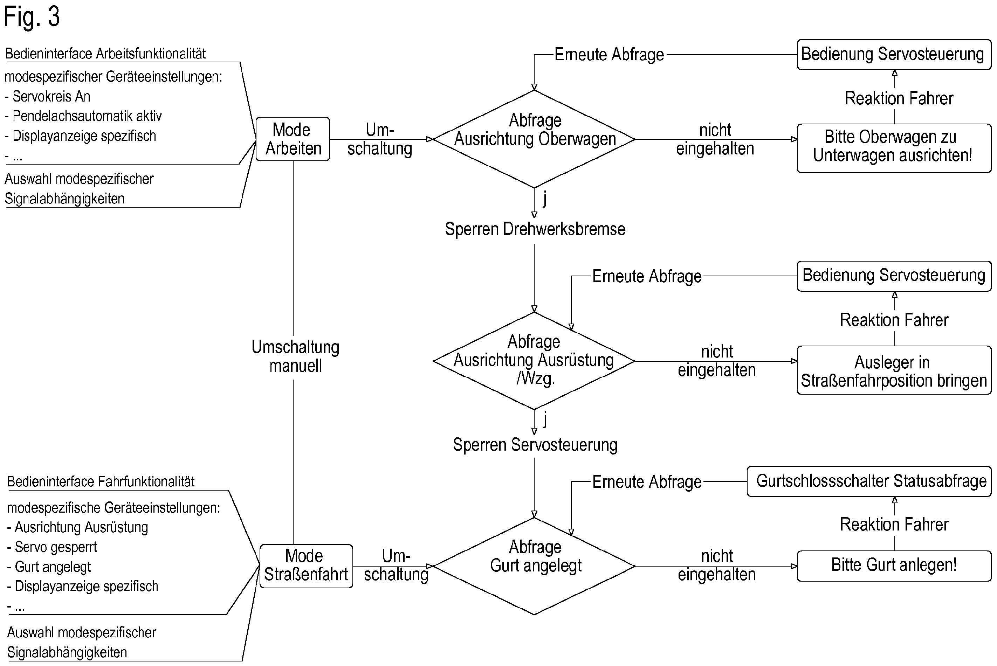

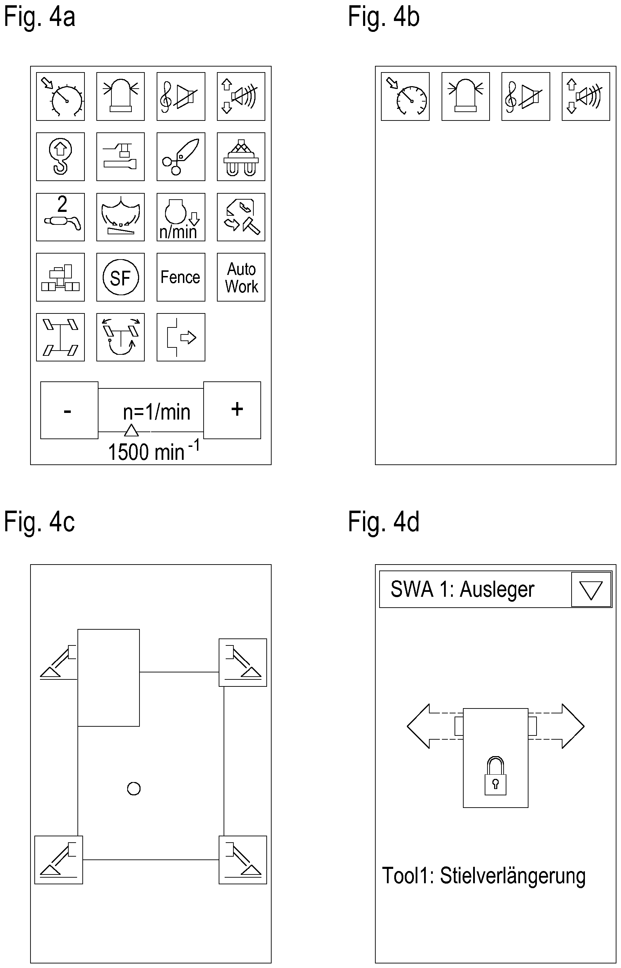

Anschließend wird von der Steuereinheit überprüft, welcher Gerätemodus aktuell aktiv ist bzw. ob ein Umschaltwunsch zwischen jeweiligen Gerätemodi besteht. Für den ausgewählten Gerätemodus, hier Mode 1, 2 oder 3, werden die relevanten Funktionen zur Bedienung der Baumaschine im jeweiligen Modus ermittelt und gruppiert. Zudem erfolgt eine Überprüfung der notwendigen Voraussetzungen für den jeweiligen Modus. Letztere wird später noch mit Bezug auf die Figuren 2 oder 3 eingehend erläutert. Beispielsweise kann ein Betriebsmodus den regulären Arbeitsbetrieb (Bspw. Grabbetrieb bei einem Bagger) umfassen. Nach Auswahl des entsprechenden Modus werden auf dem Touchdisplay des Bedienpultes passende Bedienelemente angezeigt. Ein Screenshot für eine mögliche Darstellung der Bedienoberfläche ist in Figur 4a gezeigt. Jedes Kästchen kann per Toucheingabe ausgewählt werden und die damit verbundene Funktion aufgerufen werden. Durch eine passende Symbolik sind die assoziierten Funktionen selbsterklärend.

Ein zweiter Modus kann beispielsweise die Strassenfahrt sein. Nach entsprechender Auswahl des Modus könnte dann auf dem Touchdisplay die in Figur 4b exemplarisch gezeigte Bedienoberfläche zur Anzeige gebracht werden. Erkennbar ist ein deutlicher Unterschied hinsichtlich der Anzahl an Bedienelementen als auch deren zugeordneter Funktionen.

In einem nächsten Schritt kann nach Aktivierung des jeweiligen Modus nun durch die Steuereinheit abgefragt werden, ob sonstige Einflussfaktoren vorliegen, die Einfluss auf die dynamische Generierung der Bedienoberfläche oder die Informationsanzeige haben. Beispielhaft sind hier die Auslösungsfaktoren Wartung, Bedienung oder Umwelt genannt. Ersterer wird durch einen Wartungswunsch des Bedieners erkannt, bspw. indem ein entsprechender Schalter betätigt wird oder ein Wartungsgerät an eine dafür vorgesehene Schnittstelle angeschlossen wird. Liegt ein Wartungswunsch vor, so erfolgt umgehend eine Anpassung der Bedienoberfläche an die Wartungsaufgabe, indem die notwendigen Bedienelemente für die Ausführung von Wartungsarbeiten eingeblendet werden.

Wird ein entsprechender Wartungswunsch nicht erkannt, so prüft die Steuereinheit weiter, ob spezifische Bedieneingabe vorliegen. Hierunter fällt beispielsweise die Betätigung eines Masterbedienelementes, wie eines Greifers zur Steuerung einzelner Aktoren der Baumaschine, insbesondere eine Aktivierung des Grabsystems, oder aber auch generell das Aufrufen neuer Arbeitsaufträge. Im Fall einer positiven Prüfung wird umgehend die passende Bedienoberfläche generiert. Ein Beispiel der dann ausgegeben Bedienoberfläche bzw. der Darstellung auf dem Informationsdisplay ist in Figur 4c wiedergegeben. Dies kommt unmittelbar zur Anzeige, wenn ein Masterbedienelement für die Steuerung der Baggerabstützung durch den Baggerfahrer betätigt wird.

Eine automatische Anpassung der Bedienoberfläche könnte aber auch dann erfolgen, wenn eine Zustandsänderung am Bagger erkannt wird. Dies ist beispielsweise bei einem Werkzeugwechsel der Fall. Die resultierende Bedienoberfläche ist in Figur 4d gezeigt, die dem Nutzer eine Änderung am Ausleger anzeigt und gleichzeitig etwaige Einstellungen zur Anpassung gewisser Maschineneinstellungen an das neue Werkzeug ermöglicht.

Können entsprechende Bedieneingaben durch die Steuereinheit nicht festgestellt werden, dann wird das Vorliegen relevanter Umwelteinflüsse geprüft und bei Bedarf eine Anpassung der Bedienoberfläche ausgeführt. Hierzu zählen beispielsweise die mittels Sensorik erkannten Helligkeitsbedingungen der Umwelt, des aktuellen Niederschlags als auch die Umgebungstemperatur bzw. die Temperatur innerhalb der Maschinenkabine. Bei Bedarf kann hier die Bedienoberfläche um Bedienelemente für die Lichtsteuerung, Scheibenwischer oder die Klimaregelung innerhalb der Kabine ergänzt werden.

Figur 2 zeigt nunmehr den ablaufenden Prozess für die Prüfung etwaiger Geräteabhängigkeiten bei einem Modewechsel. Beispielsweise wird hier durch die Steuereinheit erkannt, dass der Nutzer einen Gerätemoduswechsel von Mode A in den Mode B beabsichtigt. In diesem Fall überprüft die Steuereinheit etwaige Geräteeinstellungen, Geräteausrichtungen bzw. Geräteparameter darauf, ob diese die Erfordernisse für den Wechsel in den Gerätemodus B erfüllen. Die Prüfung beginnt zunächst mit der Geräteabhängigkeit A. Erfüllt der zugeordnete Wert A nicht die Anforderungen für einen Moduswechsel, so wird der Maschinenführer davon in Kenntnis gesetzt und aktive zur Korrektur aufgefordert, vorzugsweise indem gleich die passenden Bedienelemente eingeblendet werden. Nach erfolgreicher Fahrerinteraktion wird die nächste Geräteabhängigkeit B analog überprüft und gegebenenfalls korrigiert. Sobald alle Geräteabhängigkeiten erfüllt sich, kann der Moduswechsel vollzogen und die Bedienoberfläche an den neuen Modus angepasst werden.

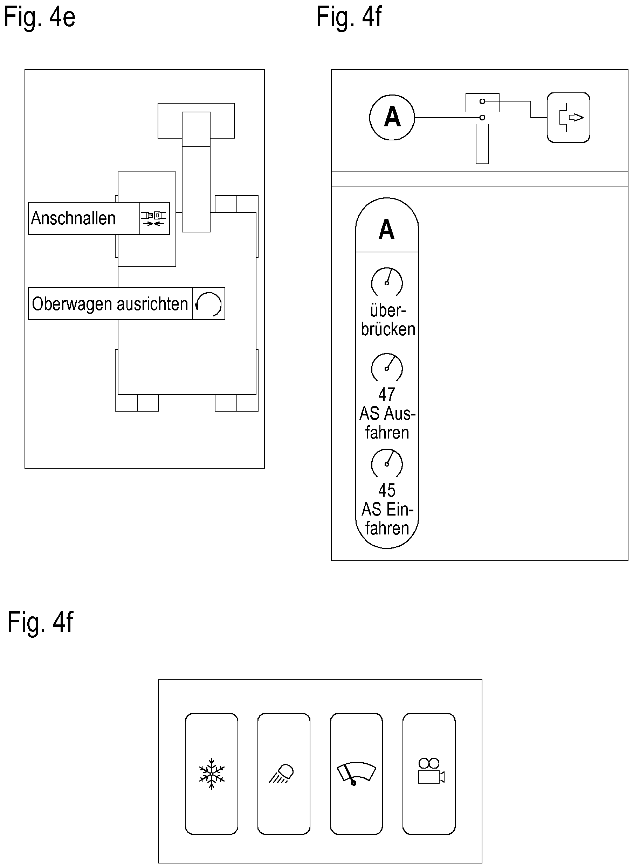

Ein konkretes Beispiel für einen derartigen Moduswechsel bei einem Bagger ist in Figur 3 gezeigt. Hier soll der Bagger vom Gerätemodus "Arbeiten" in den Gerätemodus "Straßenfahrt" umgeschaltet werden. Im Gerätemodus "Arbeiten" existieren modusspezifische Geräteeinstellungen. So zum Beispiel muss der Servokreis angeschaltet sein, eine Pendelachsautomatik aktiv sein und die entsprechende Displayanzeige des Bedienpultes auf den Gerätemodus "Arbeit" abgestimmt sein (s. bspw. Figur 4a). Wird ein entsprechender Wunsch zum Moduswechsel erkannt, überprüft die Steuereinheit zunächst die Ausrichtung des Oberwagens, insbesondere ob die Drehposition des Oberwagens die Voraussetzungen für die Straßenfahrt erfüllt. Weicht beispielsweise der Oberwagenwinkel vom vorgegebenen Drehwinkel ab, so erfolgt eine entsprechende Aufforderung an den Bediener (s. Figur 4e), den Oberwagen zum Unterwagen entsprechend auszurichten. Dabei überprüft die Steuereinheit laufend, ob der Baggerfahrer entsprechende Bedienbefehle ausführt, d.h. die Servosteuerung betätigt, um den Oberwagen auszurichten. Ist das Erfordernis der Ausrichtung des Oberwagens erfüllt, kann die Drehwerksbremse automatisiert von der Steuereinheit gesperrt werden.

Im nächsten Schritt erfolgt die Überprüfung des nächsten Gerätezustands durch die Steuereinheit, nämlich die Abfrage der Ausrichtung der Ausrüstung bzw. des Anbauwerkzeuges. Ist die Ausrüstung bzw. das Anbauwerkzeug für die Straßenfahrt passend ausgerichtet bzw. hat der Bediener durch entsprechende Betätigung dieses nach erfolgter Aufforderung durch die Steuereinheit ausgerichtet, so kann die Steuereinheit die Servosteuerung sperren und als nächstes abfragen, ob der Bediener den Gurt für die Straßenfahrt angelegt hat. Kann auch dies am Ende positiv beantwortet werden, so wird der Bagger letztendlich in den Modus Straßenfahrt umgeschaltet und die entsprechende Bedienoberfläche auf dem Anzeigeelement des Bedienpults generiert (Figur 4b).

Über die Vorwahl von Modes können auch weitere bestimmte Geräteeinstellungen angepasst werden, wie bspw. die Lenkwinkelauflösung, Umbelegung eines Gebers, etc..

Bestimmte Einzelfunktionen können zudem gekoppelt bedient werden. Als Beispiel sei genannt, dass nach dem Parken und der Aktivierung der Parkbremse auch zusätzlich die Umfeld- und Aufstiegsbeleuchtung aktiviert wird, die Ausrüstung drucklos geschaltet wird, usw..

Alle Funktionen, welche über die unterschiedlichen Geräte gleich sind, lassen sich zudem an derselben Stelle bedienen. Auch bei der graphischen Ausgestaltung der Bedienelemente auf der Bedienoberfläche ergeben sich zahlreiche Optionen. So kann die konkrete visuelle Gestaltung der Bedien-Hologramme auf unterschiedliche Bedienerumfänge und Arbeitsprozesse hinweisen. Siehe hierzu rein exemplarisch die Darstellungen 4f und 4g. Eine reine An/Aus-Funktionen wird zum Beispiel über ein rechteckiges Hologramm mit abgefasten Kanten dargestellt (Figur 4f). Runde Bedienelemente können neben der Funktion der Aktivierung/Deaktivierung noch weitere Einstellmöglichkeiten beinhalten (Figur 4f). Durch Variation der zeitlichen Betätigung des Bedienelements lassen sich unterschiedliche Funktionen des Bedienelementes aufrufen. Bspw. führt eine kurze Betätigung zur Aktivierung/Deaktivierung der zugeordneten Funktion, während durch eine lange Betätigung ein Untermenü bzw. eine Unterstruktur aufgerufen werden kann.

Ebenso kann eine längliche, rechteckige Form des Bedienelementes auf eine hinterlegte Logik hinweisen, wie das automatische Erkennen von einsetzender Dämmerung (Figur 4g). Je nach Einstellung kann die zugeordnete Funktion automatisch ausgeführt werden oder aber es erfolgt lediglich ein Hinweis auf eine nötige Einstellungsänderung. Alle Bedienelemente sind, sofern notwendig, mit verständlichen Statusvisualisierungen ausgeführt, insbesondere werden schematische Gerätedarstellungen verwendet, um Warnungen, Hinweise und Funktionalität einfacher und verständlicher darzustellen. Der Status der jeweiligen Funktion kann direkt über eine Darstellung des Bedienelementes erfolgen, zum Beispiel unter Verwendung animierter Rahmen (s. Figur 4g), Verwendung unterschiedlicher Farben, Ergänzungen mit Symbolen (siehe z.B.Schlosssymbol oder Pfeile in Figur 4d)

Neben den Anzeigeeinheiten für den Bediener lassen sich auch mobile Endgeräte, wie bspw. Wearables für die am Bedienprozess beteiligten Personen einsetzen. Die Wearables können über eine berührungslose Schnittstelle mit der Baumaschine dauerhaft gekoppelt werden, z.B. WLan-Gerätehotspots. Die Baumaschine kann die Lage der Wearables und somit der beteiligten Personen im direkten Arbeitsgeräteumfeld erfassen und dadurch drohende Kollisionen mit den Personen während des Verfahrens der Arbeitsausrüstung frühzeitig zu erkennen. Zudem können dem Insassen in der Kabine die Positionen des Baustellenpersonals, beispielsweise über eine Geräte-Draufsicht mit überlagerten Personen-Icons angezeigt werden.

Die Wearables dienen zudem als Kommunikationsschnittstelle zwischen allen beteiligten Personen an der Arbeitsstätte und es kann gegebenenfalls ein eingeschränkter Zugriff auf die Gerätebedienung über das Wearable erfolgen, wie bspw. das Auslösen eines Nothalt-Vorgang bei Gefahrensituation (z.B. eine Person überwacht den Grabvorgang und stellt eine Kollision mit einer Erdleitung fest). Das Wearable soll sich automatisch mit dem nächstliegenden Arbeitsgerät koppeln, wobei je nach Arbeitsgerät unterschiedliche Funktionalitäten zur Verfügung stehen.

## Patentansprüche

1. Baumaschine, insbesondere Erdbewegungsmaschine, mit wenigstens einem Bedienpult zur Eingabe von Bedienerbefehlen für die Steuerung der Baumaschine, wobei
das Bedienpult wenigstens ein Anzeigemittel zur Darstellung einer dynamisch generierbaren graphischen Bedienoberfläche zur Maschinensteuerung aufweist,
eine Steuereinheit vorgesehen ist, die eine Änderung des Betriebsmodus der Baumaschine zwischen einem Arbeitsbetrieb, einem Fahrbetrieb oder einem Wartungs- und Testbetrieb erkennt und in Abhängigkeit der Betriebsmodusänderung die Bedienoberfläche anpasst,
die Steuereinheit weiter konfiguriert ist, vor der Anpassung der Bedienoberfläche zu ermitteln, welche Funktionen und Steuerbefehle für den jeweiligen Betriebsmodus erlaubt bzw. sinnvoll sind und eine Bedienoberfläche mit einer eingeschränkten, auf den erkannten Betriebsmodus angepassten Auswahl von Bedienelementen zur Ausführung der ermittelten Funktionen und Steuerbefehle generiert,
**dadurch gekennzeichnet, dass**
die Steuereinheit konfiguriert ist, Änderungen von Umweltbedingungen zu erkennen, insbesondere sensorisch zu erfassen, und in Abhängigkeit der erkannten Änderung der Umweltbedingungen die mittels des Anzeigeelementes dargestellte Bedienoberfläche anzupassen.

2. Baumaschine nach Anspruch 1, **dadurch gekennzeichnet, dass** das Anzeigemittel ein berührungsempfindliches Displayelement und/oder ein festes Bedienfeld mit anpassbaren Bezeichnungen der Bedienelemente des Bedienfeldes ist.

3. Baumaschine nach einem der vorhergehenden Ansprüche, **dadurch gekennzeichnet, dass** die Steuereinheit konfiguriert ist, Änderungen am Maschinenzustand zu erkennen, insbesondere sensorisch zu erfassen, und in Abhängigkeit der erkannten Zustandsänderung die mittels des Anzeigeelementes dargestellte Bedienoberfläche anpasst.

4. Baumaschine nach einem der vorhergehenden Ansprüche, **dadurch gekennzeichnet, dass** die Steuereinheit konfiguriert ist, manuelle Benutzereingaben zu erkennen, insbesondere mittels ein oder mehrerer Masterelemente getätigte Bedieneingaben zu erkennen, und in Abhängigkeit der erkannten Bedieneingabe die mittels des Anzeigeelementes dargestellte Bedienoberfläche anpasst.

5. Baumaschine nach einem der vorhergehenden Ansprüche, **dadurch gekennzeichnet, dass** die Steuereinheit konfiguriert ist, eine Anpassung der Bedienoberfläche dahingehend auszuführen, dass lediglich die im erkannten Betriebsmodus und/oder Arbeitsprozess relevanten Bedienelemente und Einstellmöglichkeiten angezeigt werden.

6. Baumaschine nach einem der vorhergehenden Ansprüche, **dadurch gekennzeichnet, dass** die Steuereinheit konfiguriert ist, den Betriebsmodus, den Maschinenzustand, die Bedieneingaben sowie Umwelteinflüsse zu priorisieren und diese Faktoren in Abhängigkeit ihrer Priorität für die Anpassung der Bedienoberfläche zu berücksichtigen, wobei bevorzugt dem Betriebsmodus die höchste Priorität zugeordnet ist.

7. Baumaschine nach einem der vorhergehenden Ansprüche, **dadurch gekennzeichnet, dass** Mittel zur Benutzerauthentifizierung vorgesehen sind und die Steuereinheit konfiguriert ist, die Bedienoberfläche in Abhängigkeit eines für den authentifizierten Bediener hinterlegten Profils anzupassen.

8. Baumaschine nach einem der vorhergehenden Ansprüche, **dadurch gekennzeichnet, dass** wenigstens ein Informationsanzeigeelement zur Darstellung etwaiger Maschineninformationen vorgesehen ist, das Bestandteil des Bedienpultes oder als separates Element ausgeführt ist, wobei die Steuereinheit konfiguriert ist, die auf dem Informationsanzeigeelement dargestellten Informationen in Abhängigkeit des aktiven Betriebsmodus und/oder des Gerätezustandes und/oder des authentifizierten Nutzers und/oder von Umwelteinflüssen und/oder erfolgter Bedieneingaben anzupassen.

9. Baumaschine nach einem der vorhergehenden Ansprüche, **dadurch gekennzeichnet, dass** die Steuereinheit konfiguriert ist, einen bedienerseitig ausgelösten Betriebsmodus zu erfassen und in Abhängigkeit der Modusänderung bestimmte Maschineneinstellungen und/oder Geräteausrichtungen und/oder Maschinenparameter überprüft und gegebenenfalls einen nachfolgenden Korrekturprozess zu deren Anpassung auslöst.

10. Baumaschine nach Anspruch 9, **dadurch gekennzeichnet, dass** die Steuereinheit konfiguriert ist, während eines Korrekturprozesses automatisiert oder teilautomatisiert zumindest einen Teil der Maschineneinstellungen und/oder Geräteausrichtungen und/oder Maschinenparameter anzupassen und/oder den Bediener aufzufordern, zumindest einen Teil der Maschineneinstellungen und/oder Geräteausrichtungen und/oder Maschinenparameter manuell anzupassen.

11. Baumaschine nach einem der vorhergehenden Ansprüche, **dadurch gekennzeichnet, dass** die Baumaschine, insbesondere die Steuereinheit, eine Schnittstelle für die Kommunikation mit wenigstens einem Mobilgerät, insbesondere einem Wearable aufweist.

12. Baumaschine nach Anspruch 11, **dadurch gekennzeichnet, dass** die Baumaschine, insbesondere Steuereinheit, die aktuelle Position des Mobilgerätes, insbesondere Wearables, zumindest im direkten Arbeitsumfeld der Baumaschine erfasst und diese bei der Maschinenansteuerung, insbesondere der Ansteuerung von etwaigen Maschinenaktoren berücksichtigt um Kollisionen zwischen Maschinenkomponenten und eines das Mobilgerät mitführenden Person zu vermeiden, wobei weiter vorzugsweise die Steuereinheit konfiguriert ist, die Position der über die Schnittstelle gekoppelten Mobilgeräte über ein Anzeigeelement darzustellen.

13. Baumaschine nach einem der Ansprüche 11 oder 12, **dadurch gekennzeichnet, dass** mittels des Mobilgerätes ein Fernzugriff auf die am Anzeigemittel dargestellte Bedienoberfläche möglich ist.

## Claims

1. Construction machine, in particular an earth-moving machine, having at least one control panel for inputting operator commands for the control of the construction machine, wherein
the control panel comprises at least one display means for presenting an operator interface that can be dynamically generated for the machine control;
a control unit is provided, which recognizes a change of the mode of operation of the construction machine between a working operation, a travel operation, or a service or test operation and adapts the operating interface depending on the change of the mode of operation,
the control unit is further configured to identify which functions and control commands are authorized or reasonable for the respective mode of operation, and generates a user interface with a restricted selection of operating elements adapted to the recognized mode of operation for executing the identified functions and control commands,
**characterized in that**
the control unit is configured to recognize changes of the environmental conditions, in particular to detect these using a sensor system, and to adapt the operating interface presented by means of the display element depending on the recognized change to the environmental conditions.

2. Construction machine in accordance with claim 1, **characterized in that** the display means is a touch-sensitive display element and/or a fixed operating field having adaptable designations of the operating elements of the operating field.

3. Construction machine in accordance with any one of the preceding claims, **characterized in that** the control unit is configured to recognize changes of the machine state, in particular to detect these using a sensor system, and adapts the operating interface presented by means of the display element depending on the recognized state change.

4. Construction machine in accordance with any one of the preceding claims, **characterized in that** the control unit is configured to recognize manual user inputs, in particular to recognize operating inputs made by means of one or more master elements, and adapts the operating interface presented by means of the display element depending on the recognized operating input.

5. Construction machine in accordance with any one of the preceding claims, **characterized in that** the control unit is configured to carry out an adaptation of the operating interface to the extent that only the operating elements and setting options relevant in the recognized mode of operation and/or work process are displayed.

6. Construction machine in accordance with any one of the preceding claims, **characterized in that** the control unit is configured to prioritize the mode of operation, the machine state, the operating inputs, and the environmental influences and to take account of these factors depending on their priority for the adaptation of the operating interface, wherein the highest priority preferably is associated with the mode of operation.

7. Construction machine in accordance with any one of the preceding claims, **characterized in that** means for user authentication are provided; and **in that** the control unit is configured to adapt the operating interface depending on a profile stored for the authenticated operator.

8. Construction machine in accordance with any one of the preceding claims, **characterized in that** at least one information display element for presenting possible machine information is provided that is a component of the control panel or is designed as a separate element, wherein the control unit is configured to adapt the information displayed on the information display element depending on the active mode of operation and/or on the unit state and/or on the authenticated user and/or on environmental influences and/or on operating inputs that have been made.

9. Construction machine in accordance with any one of the preceding claims, **characterized in that** the control unit is configured to detect a mode of operation triggered at the operator side and checks specific machine settings and/or unit orientations and/or machine parameters depending on the mode change and triggers a subsequent correction process for their adaptation as necessary.

10. Construction machine in accordance with claim 9, **characterized in that** the control unit is configured to adapt at least some of the machine settings and/or unit orientations and/or machine parameters in an automated or semi-automated manner during a correction process and/or to prompt the operator to manually adapt at least some of the machine settings and/or unit orientations and/or machine parameters.

11. Construction machine in accordance with any one of the preceding claims, **characterized in that** the construction machine, in particular the control unit, has an interface for the communication with at least one mobile device, in particular a wearable.

12. Construction machine in accordance with claim 11, **characterized in that** the construction machine, in particular the control unit, detects the current position of the mobile device, in particular of the wearable, at least in the direct working environment of the construction machine and takes it into account in the machine control, in particular the control of any machine actuators, to avoid collisions between machine components and a person carrying the mobile device, wherein the control unit further preferably is configured to display the position of the mobile devices coupled via the interface via a display element.

13. Construction machine in accordance with any one of the claims 11 or 12, **characterized in that** remote access to the operating interface displayed on the display means is possible by means of the mobile device.

## Revendications

1. Machine de construction, notamment machine de terrassement, avec au moins un pupitre de commande pour l'entrée d'instructions d'opérateur pour la commande de la machine de construction,
le pupitre de commande présentant au moins un moyen d'affichage pour la représentation d'une surface utilisateur graphique pouvant être générée dynamiquement pour la commande de la machine,
une unité de commande étant prévue, qui reconnaît une modification du mode de fonctionnement de la machine de construction entre un mode de travail, un mode de déplacement ou un mode de maintenance et de test et adapte la surface utilisateur en fonction de la modification du mode de fonctionnement,
l'unité de commande étant en outre configurée pour déterminer, avant l'adaptation de la surface utilisateur, quelles fonctions et instructions de commande sont autorisées ou judicieuses pour le mode de fonctionnement respectif et génère une surface utilisateur avec une sélection limitée d'éléments de commande, adaptée au mode de fonctionnement reconnu, pour l'exécution des fonctions et des instructions de commande déterminées,
**caractérisée en ce que**
l'unité de commande est configurée pour reconnaître, notamment détecter par capteur, des modifications de conditions environnementales, et pour adapter la surface utilisateur représentée au moyen de l'élément d'affichage en fonction de la modification reconnue des conditions environnementales.

2. Machine de construction selon la revendication 1, **caractérisée en ce que** le moyen d'affichage est un élément d'affichage sensible au toucher et/ou un panneau de commande fixe avec des désignations adaptables des éléments de commande du panneau de commande.

3. Machine de construction selon l'une quelconque des revendications précédentes, **caractérisée en ce que** l'unité de commande est configurée pour reconnaitre, notamment détecter par capteur, des modifications de l'état de la machine et adapte la surface utilisateur représentée au moyen de l'élément d'affichage en fonction de la modification d'état reconnue.

4. Machine de construction selon l'une quelconque des revendications précédentes, **caractérisée en ce que** l'unité de commande est configurée pour reconnaître des entrées manuelles de l'utilisateur, notamment pour reconnaître des entrées de commande effectuées au moyen d'un ou de plusieurs éléments maîtres, et adapte la surface utilisateur représentée au moyen de l'élément d'affichage en fonction de l'entrée de commande reconnue.

5. Machine de construction selon l'une quelconque des revendications précédentes, **caractérisée en ce que** l'unité de commande est configurée pour effectuer une adaptation de la surface utilisateur de manière à ce que seuls les éléments de commande et les possibilités de réglage pertinents dans le mode de fonctionnement et/ou le processus de travail reconnu soient affichés.

6. Machine de construction selon l'une quelconque des revendications précédentes, **caractérisée en ce que** l'unité de commande est configurée pour prioriser le mode de fonctionnement, l'état de la machine, les entrées de commande ainsi que les influences de l'environnement et pour prendre en compte ces facteurs en fonction de leur priorité pour l'adaptation de la surface utilisateur, la priorité la plus élevée étant de préférence attribuée au mode de fonctionnement.

7. Machine de construction selon l'une quelconque des revendications précédentes, **caractérisée en ce que** des moyens d'authentification de l'utilisateur sont prévus et l'unité de commande est configurée pour adapter la surface utilisateur en fonction d'un profil enregistré pour l'utilisateur authentifié.

8. Machine de construction selon l'une quelconque des revendications précédentes, **caractérisé en ce qu'**il est prévu au moins un élément d'affichage d'informations pour représenter d'éventuelles informations sur la machine, qui est un constituant du pupitre de commande ou est conçu en tant qu'élément séparé, l'unité de commande étant configurée pour adapter les informations représentées sur l'élément d'affichage d'informations en fonction du mode de fonctionnement actif et/ou de l'état de l'appareil et/ou de l'utilisateur authentifié et/ou des influences environnementales et/ou des entrées de commande effectuées.

9. Machine de construction selon l'une quelconque des revendications précédentes, **caractérisé en ce que** l'unité de commande est configurée pour détecter un mode de fonctionnement déclenché par l'utilisateur et, en fonction de la modification de mode, pour vérifier certains réglages de la machine et/ou certaines orientations de l'appareil et/ou certains paramètres de la machine et, le cas échéant, pour déclencher un processus de correction ultérieur en vue de leur adaptation.

10. Machine de construction selon la revendication 9, **caractérisée en ce que** l'unité de commande est configurée pour adapter de manière automatisée ou partiellement automatisée au moins une partie des réglages de la machine et/ou des orientations de l'appareil et/ou des paramètres de la machine pendant un processus de correction et/ou pour demander à l'opérateur d'adapter manuellement au moins une partie des réglages de la machine et/ou des orientations de l'appareil et/ou des paramètres de la machine.

11. Machine de construction selon l'une quelconque des revendications précédentes, **caractérisée en ce que** la machine de construction, notamment l'unité de commande, présente une interface pour la communication avec au moins un appareil mobile, notamment un wearable.

12. Machine de construction selon la revendication 11, **caractérisé en ce que** la machine de construction, notamment l'unité de commande, détecte la position actuelle de l'appareil mobile, notamment du wearable, au moins dans l'environnement de travail direct de la machine de construction et en tient compte lors de la commande de l'machine, notamment de la commande d'éventuels actionneurs de la machine, afin d'éviter des collisions entre des composants de la machine et une personne transportant l'appareil mobile, l'unité de commande étant en outre configurée de préférence pour représenter la position des appareils mobiles couplés par l'intermédiaire de l'interface via un élément d'affichage.

13. Machine de construction selon l'une quelconque des revendications 11 ou 12, **caractérisé en ce qu'**un accès à distance à la surface utilisateur représentée sur le moyen d'affichage est possible au moyen de l'appareil mobile.
